# EUROPÄISCHE PATENTANMELDUNG

(11) **EP 1 734 274 A2**
(43) Veröffentlichungstag der Anmeldung: **20.12.2006**
(21) Anmeldenummer: 06009819.1
(22) Anmeldetag: 12.05.2006
(51) Int. Cl.: F16D 23/12

(54) **Kupplungsbetätigungsvorrichtung**

(30) Priorität: 15.06.2005 DE 102005027612
(71) Anmelder: LuK Lamellen und Kupplungsbau Beteiligungs KG, 77815 Bühl (DE)
(72) Erfinder: Haas, Wolfgang, 77815 Bühl (DE); Mán, Lászlo, Dr., 77833 Ottersweier-Unzhurst (DE); Friedmann, Oswald, 77839 Lichtenau (DE)

(57) **Zusammenfassung**

Die Erfindung schafft eine Kupplungsbetätigungsvorrichtung, die insbesondere zur Betätigung einer Kupplung eines Fahrzeuges vorgesehen ist, mit mindestens einer Feder (1), deren Federkraft zur Betätigung der Kupplung mittels einer zugeordneten mechanischen Kraftübertragungsstrecke zumindest ein Kraftübertragungselement umfasst und wobei dieses um eine Achse (A) der Kupplung derart verdrehbar ist, dass in Abhängigkeit des Verdrehwinkels eine am Kraftübertragungselement axial wirkende (Dreh-) Rampe (2,3,4,5;19,20) die ausgeleitete Kraft gegenüber der eingeleiteten Kraft entsprechend übersetzt. Alternativ kann die erfindungsgemäße Kupplungsbetätigungsvorrichtung eine um eine Achse (A) der Kupplungsbetätigungsvorrichtung verdrehbare Drehrampe (15,31) aufweisen, die in Abhängigkeit des Verdrehwinkels eine entsprechende axial wirkende Betätigungskraft durch die Verdrehung erzeugt.

## Beschreibung

Die vorliegende Erfindung betrifft eine Kupplungsbetätigungsvorrichtung gemäß dem Oberbegriff des Patentanspruchs 1.

Bisher wurden Kupplungen beispielsweise mittels eines Hebels betätigt, der eine unveränderliche Hebellänge besitzt und beispielsweise mittels eines elektromotorischen Antriebs zum Öffnen und/oder Schließen der Kupplung angetrieben werden konnte. Wenn nun über den Verfahrweg der Kupplungsbetätigung eine veränderliche Betätigungskraft aufgebracht werden musste, so wurde zu diesem Zweck der Elektromotor, um ein entsprechend hohes Moment zur Verfügung zu stellen, mit entsprechenden Stromwerten beaufschlagt. Eine andere Möglichkeit der Kupplungsbetätigung besteht beispielsweise in der Form eines von einem Elektromotor angetriebenen Zentralausrückers, wobei auch hier der Elektromotor mit hohen Stromwerten bestromt werden muss, um entsprechend hohe Abtriebsmomente zur Verfügung zu stellen. Darüber hinaus ist es erforderlich, den Elektromotor - um eine Beschädigung der Kupplungsbetätigungsaktorik zu vermeiden - nach dem Schließen der Kupplung schnell abzubremsen.

Um nun diese Problematik zu umgehen, wurde von der Anmelderin ein unter der DE 10 2004 009 832 A1 beschriebenes Hebelsystem zum Betätigen von Kupplungen geschaffen. Das dort beschriebene Hebelsystem weist Hebelarme mit veränderbaren Hebellängen auf, wobei zu diesem Zweck der den Hebel abstützende Hebeldrehpunkt entlang des Betätigungshebels verlagert werden konnte und sich somit bei unveränderlichem Krafteinleitungspunkt in den Hebel in Abhängigkeit von der Verlagerung des Hebeldrehpunkts verschiedene wirksame Hebellängen ergeben. Obwohl ein solches Hebelsystem bereits vielfache Vorteile gegenüber bekannten Kupplungsbetätigungsvorrichtungen aufweist, lässt es trotzdem Raum für deutliche Verbesserungen.

Das nach dieser Offenlegungsschrift bekannte Hebelsystem wird an dem Krafteinleitungspunkt der Betätigungskraft in den Hebel mit einer vorbestimmbaren Kraft beaufschlagt. Ausgangsseitig, d. h. also beispielsweise auf der Seite eines Axiallagers wirkt eine entsprechende, zur in den Betätigungshebel eingeleiteten Federkraft komplementäre Reaktionskraft. Da sich der Betätigungshebel ― umfasst ist hier beispielsweise auch eine Vielzahl von um das Axiallager radial sternförmig verlaufenden Betätigungshebeln ― an einem Hebeldrehpunkt abstützt, herrscht an diesem Abstützpunkt bei einem Hebellängenverhältnis von 1:1 zur Bildung eines Kräftegleichgewichts eine der doppelten Federkraft entsprechende Wiederlagerkraft.

Ausgehend von diesem Stand der Technik ist es die Aufgabe der vorliegenden Erfindung, die in der Kupplungsbetätigungsvorrichtung auftretenden Kräfte gering zu halten und insbesondere die zur Verstellung der Kupplungskraft erforderlichen Kräfte so gering wie möglich zu halten.

Vorzugsweise soll dabei die erfindungsgemäße Kupplungsbetätigungsvorrichtung in einen rotatorischen Bauraum passen.

Gelöst wird die oben genannte Aufgabe durch eine Kupplungsbetätigungsvorrichtung mit den Merkmalen des Patentanspruchs 1.

Demnach umfasst die erfindungsgemäße Kupplungsbetätigungsvorrichtung, die insbesondere zur Betätigung einer Kupplung eines Fahrzeuges vorgesehen ist, mindestens eine Feder, deren Federkraft zur Betätigung der Kupplung mittels einer zugeordneten mechanischen Kraftübertragungsstrecke auf die Kupplung übertragbar ist, wobei die Kraftübertragungsstrecke zumindest ein Kraftübertragungselement umfasst und wobei dieses um eine Achse der Kupplung derart verdrehbar ist, dass in Abhängigkeit des Verdrehwinkels eine am Kraftübertragungselement axial wirkende (Dreh-) Rampe die ausgeleitete Kraft gegenüber der eingeleiteten Kraft entsprechend übersetzt.

Der erfindungsgemäße Drehrampenaktor stellt damit ein Ausrücksystem für eine direkt betätigte Kupplung mit einer geringen Betätigungskraft dar, wobei dieser vorzugsweise in einem rotatorischen Bauraum Verwendung findet.

Vorzugsweise werden zwei (Dreh-) Rampen vorgesehen, wobei als Energiespeicher bevorzugt eine Tellerfeder dient, so dass über eine Rampe die Energieentnahme aus der Tellerfeder gesteuert werden kann, während über die zweite Rampe die Energieabgabe an die Kupplung bestimmt wird. In einer optimalen Auslegung der beiden Rampen können beide Energien etwa gleich groß gestaltet werden, wobei durch die Form der Rampen ein Kräftegleichgewicht bzw. Momentengleichgewicht erzielt werden kann.

Auch sind selbständig öffnende oder schließende Auslegungen der Kupplungsbetätigungsvorrichtung möglich, indem die Form und/oder Steigungen der Rampen entsprechend gewählt werden.

Gelöst wird die oben genannte Aufgabe auch durch eine Kupplungsbetätigungsvorrichtung mit den Merkmalen des Patentanspruchs 17.

Die vorstehende Aufgabe, die Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

In den Zeichnungen ist in der
- Figur 1: ein erfindungsgemäßer Drehrampenaktor als Kupplungsbetätigungsvorrichtung in einer Prinzipskizze dargestellt, wobei die Kupplung geöffnet ist;
- Figur 2: ein erfindungsgemäßer Drehrampenaktor als Kupplungsbetätigungsvorrichtung in einer weiteren Prinzipskizze dargestellt, wobei die Kupplung geschlossen wird;
- Figur 3: ein Funktionsmodell der erfindungsgemäßen Kupplungsbetätigungsvorrichtung gezeigt, wobei die Kupplung durch eine Druckfeder simuliert dargestellt ist;
- Figur 4: das Funktionsmodell der erfindungsgemäßen Kupplungsbetätigungsvorrichtung gezeigt, wobei ein Betätigungshebel dargestellt ist;
- Figur 5: eine erfindungsgemäße Kupplungsbetätigungsvorrichtung im Querschnitt, wobei der Drehrampenaktor zur Betätigung einer Differentialkupplung bei einer Allrad-Nasskupplung vorgesehen ist;
- Figur 6: ein erfindungsgemäßer Drehrampenaktor als Kupplungsbetätigungsvorrichtung in einer weiteren Prinzipskizze dargestellt, wobei mehrere Laufrollen vorgesehen sind, die in einem gemeinsamen Käfig gelagert sind;
- Figur 7: die erfindungsgemäße Kupplungsbetätigungsvorrichtung nach dem Prinzip der Figur 6 aufgebaut im Querschnitt nach einer weiteren Ausführungsform dargestellt, wobei der Drehrampenaktor zur Betätigung einer Allrad-Nasskupplung vorgesehen ist; und
- Figur 8: eine weitere Prinzipskizze einer erfindungsgemäßen Kupplungsbetätigungsvorrichtung dargestellt, wobei neben einer axialen Rampe eine weitere radiale Kurvenbahn zur Kompensation der Kräfte vorgesehen ist.

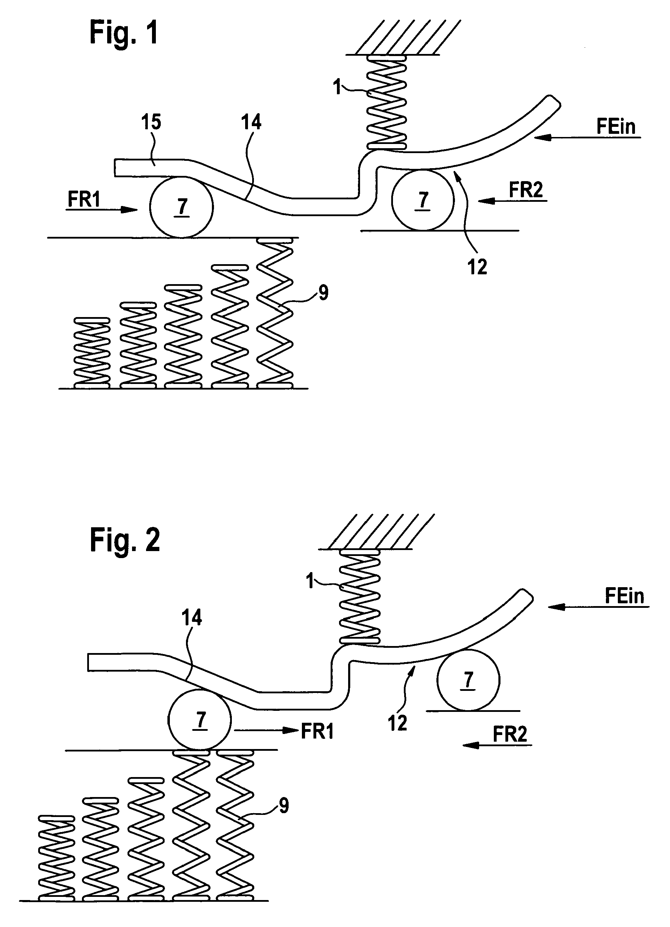

Unter Bezugnahme auf die Figuren 1 und 2 wird das Funktionsprinzip des erfindungsgemäßen Drehrampenaktors bzw. der erfindungsgemäßen Kupplungsbetätigungsvorrichtung nunmehr erläutert. In der Figur 1 ist eine Kupplung geöffnet und in der Figur 2 ist der Schließvorgang der Kupplung dargestellt.

Ist die Kupplung geöffnet, dann wird eine nur geringe Kraft FR1 - zum Beispiel eine Vorspannkraft einer Öffnungstellerfeder - auf eine in der Figur 1 links dargestellte erste Rampe eingeleitet, während die gesamte Kraft eines Energiespeichers, beispielsweise in Form einer Tellerfeder 1, auf die in der Figur 1 rechts dargestellte zweite Rampe eingeleitet wird. Beide Rampen weisen eine bestimmte Steigung 12 bzw. 14 auf, wobei in der gezeigten Stellung nach der Figur 1 eine neutrale Auslegung dieser Steigungen 12 und 14 vorgesehen ist, so dass sich die Rampenkräfte FR1 und FR2 aufheben und zur Betätigung, dass heißt Verlagerung der Drehrampe 15 lediglich eine Betätigungskraft FEin aufzubringen ist, die zur Überwindung der Reibungskräfte aufgebracht werden muss. Die Drehrampe 15 ist über Kugeln 7 an einem Gehäuse abgestützt, wobei in der in der Figur 1 gezeigten Stellung der Drehrampe 15 an den Berührungspunkten zu den Kugeln eine Gleichgewichtslage vorliegt. Soll beispielsweise eine selbstöffnende Charakteristik der Kupplung bzw. der Kupplungsbetätigungsvorrichtung vorgesehen werden, so muss an der zweiten Rampe bei der Steigung 12 ein negativer Winkel vorgesehen werden. Bei der gezeigten neutralen Auslegung ist im Berührungspunkt eine waagrechte Tangente an der zweiten Rampe vorhanden.

In der Figur 2 ist eine Stellung der Drehrampe während des Schließvorgangs der Kupplung gezeigt. Bei einer neutralen Auslegung heben sich auch hier die Rampenkräfte FR1 und FR 2 auf, so dass zum Schließen der Kupplung nur die Reibungskräfte überwunden werden müssen, die an den Rampen auftreten. Soll eine selbständig öffnende oder schließende Ausführungsform erhalten werden, muss die Steigung 12 bzw. 14 zumindest einer Rampe entsprechend angepasst werden. Für ein selbständiges Öffnen der Kupplung muss dann zum Beispiel gelten: FR1 > FR2.

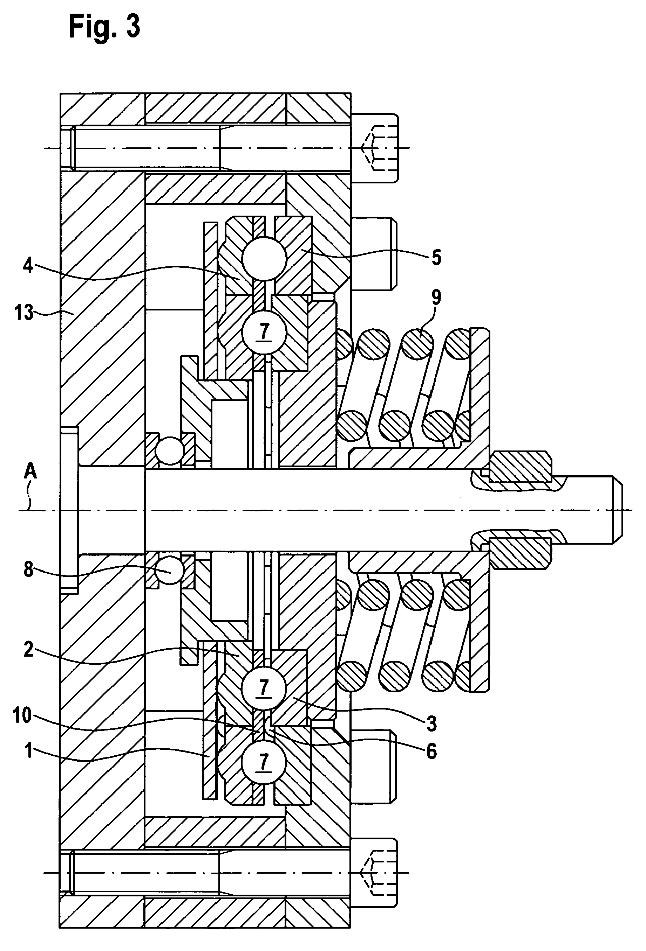

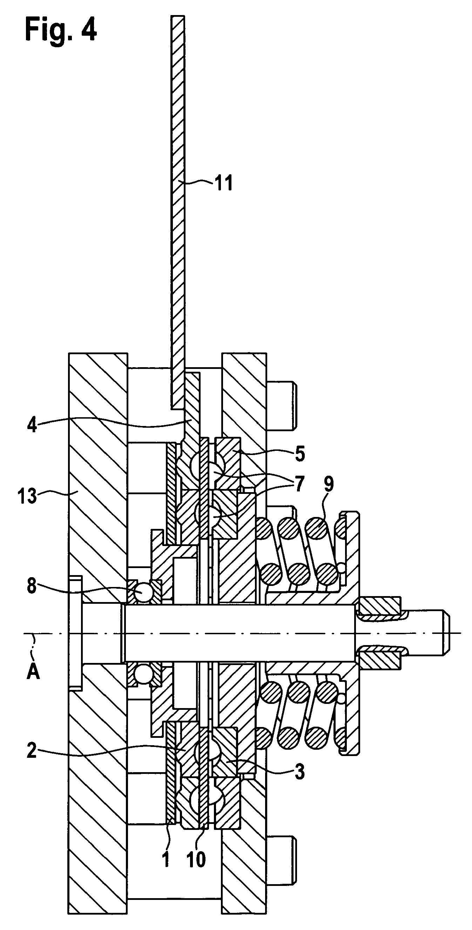

In den Figuren 3 und 4 ist ein Funktionsmodell der erfindungsgemäßen Kupplungsbetätigungsvorrichtung im Querschnitt dargestellt.

Der erfindungsgemäßen Drehrampenaktor mit einem radialen Aufbau ist mit zweiteiligen Rampen ausgeführt. In einem rotatorischen Bauraum um eine Achse A der Kupplung bzw. der Kupplungsbetätigungsvorrichtung herum ist eine erste linke Rampe 2 und eine erste rechte Rampe 3 vorgesehen, die radial innenliegend zu einer zweiten linken Rampe 4 und einer zweiten rechten Rampe 4 angeordnet sind.

Bei der radial innenliegenden Rampe weisen die beiden Rampenhälften 2 und 3 den gleichen konkaven Kurvenverlauf auf. Bei der radial außenliegenden Rampe sind vorzugsweise auch zwei konkav gekrümmte Rampen mit gleichem Kurvenverlauf vorgesehen. Durch diese gleichmäßige Aufteilung der Steigung auf die beiden Rampenhälften ergeben sich senkrecht zueinander stehende Normalkräfte an den Kugeln 7, so dass ein Herausrutschen der Kugeln 7 verhindert ist.

Die Rampen 2, 3 und 4, 5 sind mittels Kugeln 6 miteinander verbunden und aneinander derart fixiert, dass eine axiale Verlagerung zwischen der ersten und der zweiten Rampe ermöglicht ist, jedoch radial keine Verlagerung auftreten kann.

Die Kugeln 7 sind durch einen Käfig 10 geführt und gehalten, so dass eine exakte Positionierung der Kugeln 7 untereinander und relativ zu den Rampen gewährleistet ist.

Besonders vorteilhaft ist es, wenn die radiale Position der Rampenhälften zueinander und der Kugeln zueinander durch eine Zwangskopplung gewährleistet wird, indem beispielsweise eine Verzahnung (nicht dargestellt) vorgesehen wird derart, dass am Käfig 10 Zahnräder gelagert sind, die in profilierten Zahnstangen in den beiden Rampenhälften abwälzen.

In der Figur 4 ist ein Betätigungshebel 11 gezeigt, mit dem die erfindungsgemäßen Drehrampen von außen und beispielsweise mittels eines Elektromotors (nicht dargestellt) verdreht werden können. Als Energiespeicher dient hier eine Tellerfeder 1, die direkt auf die Rampen einwirkt und die sich gegen das Gehäuse 13 mittels einer Lagerung 8 abstützt. In dem Funktionsmodell nach den Figuren 3 und 4 ist die Kupplung durch eine Druckfeder 9 simuliert.

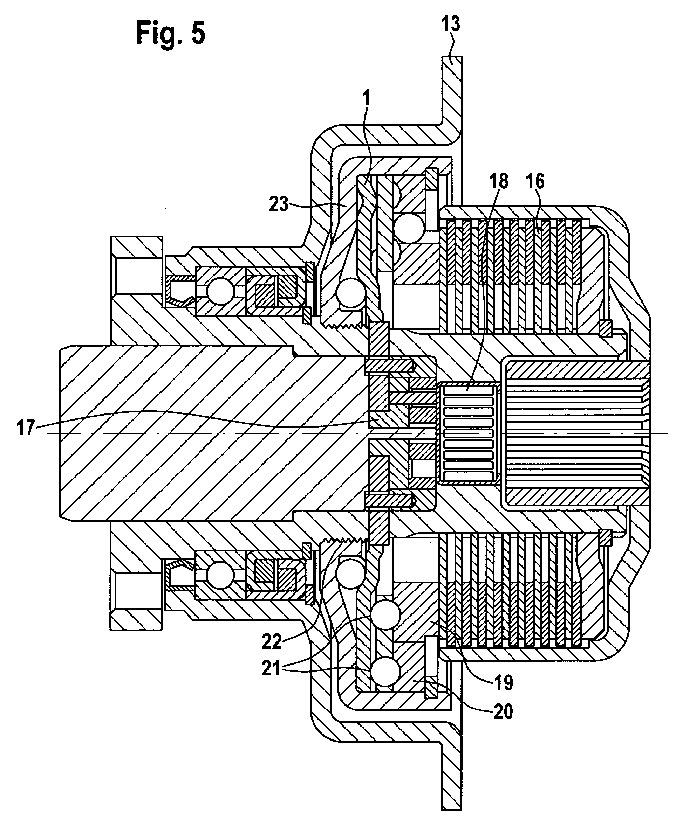

Bei der Ausführungsform nach der Figur 5 ist eine erfindungsgemäße Kupplungsbetätigungsvorrichtung für eine Allrad-Nasskupplung mit zwei kompensierten Rampen vorgesehen. Einerseits sind die beiden Rampen A und B bei 19 und 20 vorgesehen, sowie andererseits das Gegenprofil 21 in die Tellerfeder 1 integriert ist. Das Verdrehen der (Dreh-) Rampen erfolgt bei dieser Ausführungsform durch Verdrehen der Tellerfeder 1 mittels eines innenliegenden Elektromotors 18 der über ein Planetengetriebe 17 wirkt. Je nach Drehwinkel der Rampen wird eine entsprechende Betätigungskraft auf ein Lamellenpaket 16 über die Rampen eingeleitet.

Zur Verschleißnachstellung ist ein Gewinde 22 vorgesehen, welches zwischen der Achse und einem Zwischengehäuse 23 vorgesehen ist, welches in der Endstellung der Rampen (Anschlag) durch den Elektromotor gedreht wird.

Alternativ könnte bei dieser Ausführungsform eine Abkopplung der Rampen durch Axiallager (nicht dargestellt) und eine Betätigung durch einen stehenden Elektromotor erfolgen.

Bei den bisher beschriebenen Ausführungsformen sind gekrümmte Rampen vorgesehen, so dass die radiale Position der beiden Rampen sowie der Kugeln zueinander immer exakt übereinstimmen muss. Im einfachsten Fall kann dies durch Reibschluss erreicht werden, ohne dass zusätzliche Maßnahmen ergriffen werden müssen. Dabei darf jedoch kein Schlupf auftreten. Sollte ein geringer Schlupf dennoch auftreten, muss eine Zwangspositionierung in den Endlagen derart möglich sein, dass dort die Kugeln durch den Elektromotor in ihre Anschlagpositionen geschoben werden, um den aufgetretenen Schlupf korrigieren zu können.

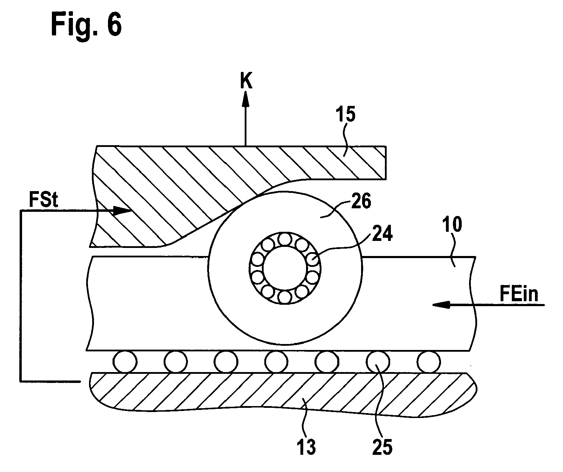

In der Figur 6 ist eine schematische Darstellung einer Ausführungsform einer erfindungsgemäßen Kupplungsbetätigungsvorrichtung gezeigt, die das Problem eines eventuell auftretenden - wenn auch geringen - Schlupfes erst gar nicht entstehen lässt. Dort sind bevorzugt mehrere Laufrollen 26 in einem Käfig 10 gelagert und laufen auf einer profilierten Drehrampe 15, während an der Gegenseite eine Abstützung über eine Axiallagerung 25 an einem Gehäuse 13 vorgesehen ist. Die Laufrollen 26 sind mittels einer Lagerung 24 am Käfig 10 gehalten. Der Käfig 10 läßt sich axial gegenüber dem feststehenden Gehäuse 13 verlagern.

Die Betätigung des Rampenmechanismus erfolgt durch Verdrehen des Käfigs 10 und damit durch Abrollen der Laufrollen 26 an der profilierten Rampe 15. Die Betätigungskraft FEin wird auf den Käfig 10 aufgebracht und dieser wird gemeinsam mit den Laufrollen 26 verschwenkt bzw. verdreht, so daß die Laufrollen 26 am Profil der Rampe 15 entlang laufen und diese in Richtung des Pfeils K, d.h. zur Betätigung der Kupplung K, verlagert. Gleichzeitig erfolgt eine Abstützung der Rampe 15 gegenüber dem Gehäuse 13 mit einer Stützkraft FSt. Die rotatorische Abstützung (Verdrehsicherung) der Rampe 15 zur unteren Laufbahn erlaubt eine gleichzeitige axiale Verschiebbarkeit.

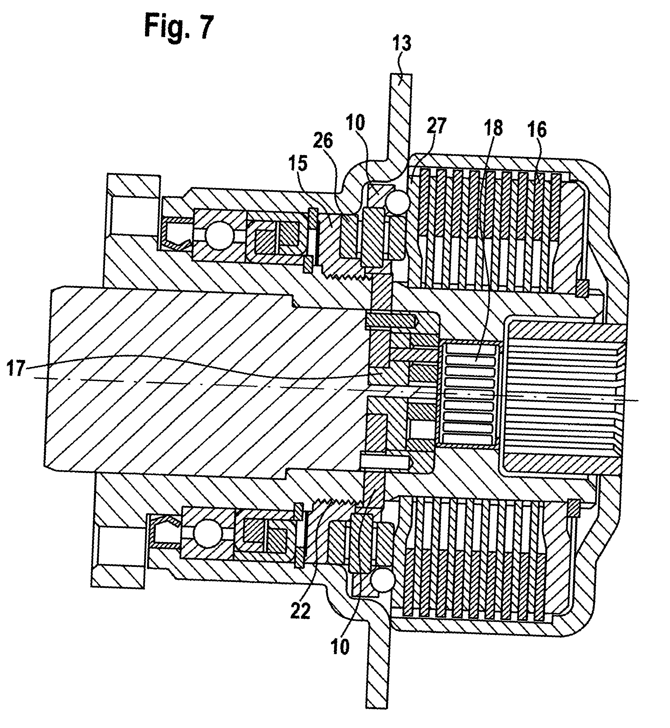

Bei der weiteren Ausführungsform nach der Figur 7 ist ein erfindungsgemäßer Drehrampenaktor dargestellt, der ohne eine Kraft- bzw. Energiekompensation ausgebildet ist. Theoretische Berechnungen haben gezeigt, dass die in einer Belagfederung gespeicherte Energie in der gleichen Größenordnung liegt wie die Reibarbeit bei energiekompensierten Ausführungsformen. Die erfindungsgemäße Kupplungsbetätigungsvorrichtung nach der Figur 7 zeichnet sich dadurch aus, dass nur eine Drehrampe 15 vorgesehen ist, deren Steigung entsprechend dem Mindestrückstellmoment für eine Notöffnung der Kupplung ausgelegt ist. Die Rampenbahn ist hierbei gekrümmt ausgeführt, da auch hier die Kupplungsbetätigungsvorrichtung in einem rotatorischen Bauraum untergebracht ist.

Um eine Mindestanpressung bei dieser Ausführungsform zu erreichen, geht die Drehrampe 15 über den nominalen Auslegungspunkt aus Sicherheitsgründen hinaus. Das gleiche gilt für die Öffnungsrichtung bzw. das Mindestlüftspiel. Die Nachstellung wird vorzugsweise über eine Gewinde 22 erfolgen. Dazu wird die Drehrampe 15 hinter einer Mutter (nicht dargestellt) angeordnet, wohingegen an der Anpressplatte die Axiallagerung erfolgt. Dadurch kann diese Mutter über die ohnehin erforderlichen Anschläge bei geöffneter Stellung einfach über den Elektromotor 18 verdreht werden. Die Kugeln im Axiallager rutschen dann lastfrei durch.

Die Laufrollen 26 rollen auf der Drehrampe 15 ab und sind dabei in einem Käfig 10 gehalten, der über ein Planetengetriebe 17 vom innenliegenden Elektromotor 18 angetrieben ist. Die Anpressplatte 27 ist mit einer Kugellaufbahn versehen und in der Nabe gegen Verdrehen gesichert und gleichzeitig axial verschiebbar. Die Ausführungsform nach der Figur 7 ist vorzugsweise bei einer Allrad-Nasskupplung einsetzbar.

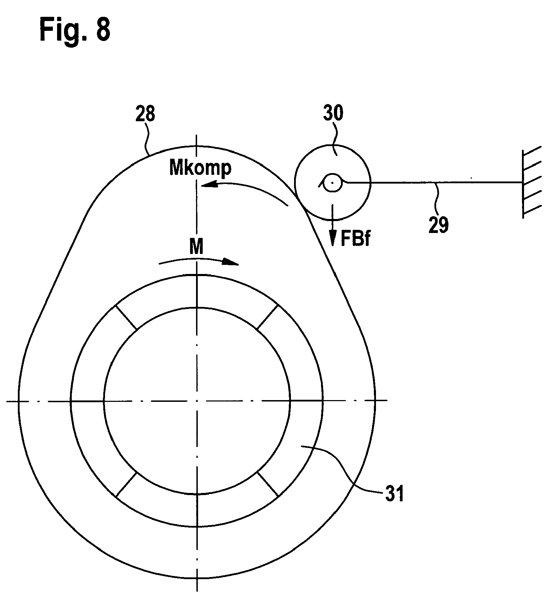

In der Figur 8 ist eine weitere Ausführungsform in Form einer Prinzipskizze dargestellt, wobei nur eine axiale Rampe 31 vorgesehen ist und zur Energie- bzw. Kraftkompensation eine radiale Kurvenbahn 28 vorgesehen ist, auf der eine Rolle 30 abrollt. Die Rolle 30 ist vorzugsweise durch eine Blattfeder 29 belastet, so dass die Rolle 30 mit einer Blattfederkraft FBf auf die Kurvenbahn 28 drückt. Es entsteht ein Kompensationsmoment Mkomp, welches dem Drehmoment M entgegenwirkt. Die Kompensationsfeder ist bei dieser Ausführungsform als einfache Blattfeder 29 ausgeführt, kann jedoch auch durch andere gleichwirkende Federn oder Federsysteme ersetzt werden.

Kurz zusammengefasst, schafft die vorliegende Erfindung eine Kupplungsbetätigungsvorrichtung, die insbesondere zur Betätigung einer Kupplung eines Fahrzeuges vorgesehen ist, mit mindestens einer Feder, deren Federkraft zur Betätigung der Kupplung mittels einer zugeordneten mechanischen Kraftübertragungsstrecke auf die Kupplung übertragbar ist, wobei die Kraftübertragungsstrecke zumindest ein Kraftübertragungselement umfasst und wobei dieses um eine Achse der Kupplung derart verdrehbar ist, dass in Abhängigkeit des Verdrehwinkels eine am Kraftübertragungselement axial wirkende (Dreh-) Rampe die ausgeleitete Kraft gegenüber der eingeleiteten Kraft entsprechend übersetzt. Alternativ kann die erfindungsgemäße Kupplungsbetätigungsvorrichtung eine um eine Achse der Kupplungsbetätigungsvorrichtung verdrehbare Drehrampe aufweisen, die in Abhängigkeit des Verdrehwinkels eine entsprechende axial wirkende Betätigungskraft durch die Verdrehung erzeugt.

Hinsichtlich vorstehend im Einzelnen nicht näher erläuterter Merkmale der Erfindung wird im Übrigen ausdrücklich auf die Ansprüche und die Zeichnungen verwiesen.

### Bezugszeichenliste

- 1: Tellerfeder
- 2: Rampe 1, links
- 3: Rampe 1, rechts
- 4: Rampe 2, links
- 5: Rampe 2, rechts
- 6: Kugel
- 7: Kugel
- 8: Lagerung
- 9: Druckfeder
- 10: Käfig
- 11: Betätigungshebel
- 12: Rampensteigung
- 13: Gehäuse
- 14: Steigung
- 15: Drehrampe
- 16: Lamellenpaket
- 17: Planetengetriebe
- 18: Elektromotor
- 19: Rampe A
- 20: Rampe B
- 21: Gegenprofil der Rampen
- 22: Gewinde
- 23: Zwischengehäuse
- 24: Lagerung
- 25: Axiallagerung
- 26: Laufrolle
- 27: Anpressplatte
- 28: Kurvenbahn
- 29: Blattfeder
- 30: Rolle
- 31: axiale Rampe

- A: Achse
- FR1: Rampenkraft
- FR2: Rampenkraft
- FEin: Betätigungskraft
- FSt: Stützkraft
- FBf: Blattfederkraft
- K: Kupplung
- MKomp: Kompensationsmoment
- M: Moment

## Patentansprüche

1. Kupplungsbetätigungsvorrichtung, insbesondere zur Betätigung einer Kupplung eines Fahrzeuges, mit mindestens einer Feder (1), deren Federkraft zur Betätigung der Kupplung mittels einer zugeordneten mechanischen Kraftübertragungsstrecke auf die Kupplung übertragbar ist, **dadurch gekennzeichnet, dass** die Kraftübertragungsstrecke zumindest ein Kraftübertragungselement umfasst, wobei dieses um eine Achse (A) der Kupplung derart verdrehbar ist, dass in Abhängigkeit des Verdrehwinkels eine am Kraftübertragungselement axial wirkende Rampe (2, 3, 4, 5; 19, 20) die ausgeleitete Kraft gegenüber der eingeleiteten Kraft übersetzt.

2. Kupplungsbetätigungsvorrichtung nach Anspruch 1, **dadurch gekennzeichnet, dass** die am Kraftübertragungselement eingeleitete Kraft die Federkraft der Feder (1) ist.

3. Kupplungsbetätigungsvorrichtung nach Anspruch 1 oder 2, **dadurch gekennzeichnet, dass** die am Kraftübertragungselement ausgeleitete Kraft die Kupplungsbetätigungskraft ist.

4. Kupplungsbetätigungsvorrichtung nach einem der Ansprüche 1 bis 3, **dadurch gekennzeichnet, dass** die Kraftübersetzung durch Anpassung einer Steigung (12) und/oder der Form der Rampe (2, 3, 4, 5; 19, 20) einstellbar ist.

5. Kupplungsbetätigungsvorrichtung nach einem der Ansprüche 1 bis 4, **dadurch gekennzeichnet, dass** zwei Kraftübertragungselemente vorgesehen sind und dass jeweils eine Rampe (2, 3, 4, 5; 19, 20) an jedem Kraftübertragungselement mit einer Steigung (12, 14) und/oder Form vorgesehen ist, derart, dass sich die Rampenkräfte (FR1, FR2) aufheben.

6. Kupplungsbetätigungsvorrichtung nach einem der Ansprüche 1 bis 4, **dadurch gekennzeichnet, dass** zwei Kraftübertragungselemente vorgesehen sind und dass jeweils eine Rampe (2, 3, 4, 5; 19, 20) an jedem Kraftübertragungselement mit einer Steigung (12, 14) und/oder Form vorgesehen ist, derart, dass sich die Kupplung selbständig öffnet oder schließt.

7. Kupplungsbetätigungsvorrichtung nach einem der Ansprüche 1 bis 6, **dadurch gekennzeichnet, dass** die beiden Rampen (2, 3, 4, 5; 19, 20) ringförmig und konzentrisch zu der Achse (A) der Kupplung ausgebildet sind.

8. Kupplungsbetätigungsvorrichtung nach einem der Ansprüche 1 bis 7, **dadurch gekennzeichnet, dass** die Feder (1) eine Tellerfeder ist.

9. Kupplungsbetätigungsvorrichtung nach Anspruch 8, **dadurch gekennzeichnet, dass** eine Rampe (2, 3, 4, 5; 19, 20) direkt auf der Tellerfeder ausgebildet ist.

10. Kupplungsbetätigungsvorrichtung nach Anspruch 9, **dadurch gekennzeichnet, dass** die Rampe (2, 3, 4, 5; 19, 20) in die Tellerfeder eingeprägt ist.

11. Kupplungsbetätigungsvorrichtung nach einem der Ansprüche 1 bis 10, **dadurch gekennzeichnet, dass** die beiden Kraftübertragungselemente mittels dazwischen angeordneten Kugeln (6) axial zueinander verlagerbar und radial aneinander fixiert sind.

12. Kupplungsbetätigungsvorrichtung nach einem der Ansprüche 1 bis 11, **dadurch gekennzeichnet, dass** das zumindest eine Kraftübertragungselement durch einen Elektromotor (18) verdrehbar ist.

13. Kupplungsbetätigungsvorrichtung nach einem der Ansprüche 1 bis 12, **dadurch gekennzeichnet, dass** auf der zumindest einen axialen Rampe (2, 3, 4, 5; 19, 20) eine Mehrzahl an Laufrollen (26) abrollt, die in einem verdrehbaren Käfig (10) gelagert sind.

14. Kupplungsbetätigungsvorrichtung nach Anspruch 13, **dadurch gekennzeichnet, dass** die Rampe (2, 3, 4, 5; 19, 20) profiliert ist.

15. Kupplungsbetätigungsvorrichtung nach einem der Ansprüche 13 oder 14, **dadurch gekennzeichnet, dass** die Betätigung durch Verdrehen des Käfigs (10) erfolgt, so dass die Laufrollen (26) auf der Rampe (2, 3, 4, 5; 19, 20) abrollen.

16. Kupplungsbetätigungsvorrichtung nach einem der Ansprüche 13 bis 15, **dadurch gekennzeichnet, dass** der Käfig (10) durch einen Elektromotor (18) verdrehbar ist.

17. Kupplungsbetätigungsvorrichtung, insbesondere zur Betätigung einer Kupplung eines Fahrzeuges, **dadurch gekennzeichnet, dass** eine um eine Achse (A) der Kupplungsbetätigungsvorrichtung verdrehbare Drehrampe (15; 31) vorgesehen ist, die in Abhängigkeit des Verdrehwinkels eine entsprechende axial wirkende Betätigungskraft erzeugt.

18. Kupplungsbetätigungsvorrichtung nach Anspruch 17, **dadurch gekennzeichnet, dass** eine radiale Kurvenbahn (28) vorgesehen ist, auf der zur Kraftkompensation eine federbelastete Rolle (30) abrollt.

19. Kupplungsbetätigungsvorrichtung nach Anspruch 18, **dadurch gekennzeichnet, dass** die Federbelastung durch eine Blattfeder (29) ausgebildet ist.
